# EUROPÄISCHE PATENTSCHRIFT

(11) **EP 1 984 132 B1**
(45) Veröffentlichungstag und Bekanntmachung des Hinweises auf die Patenterteilung: **18.11.2009**
(21) Anmeldenummer: 06722485.7
(22) Anmeldetag: 15.02.2006
(51) Int. Cl.: B21J 15/10, B23P 19/06

(54) **HYDRAULISCHE BEARBEITUNGSZANGE**
HYDRAULIC PROCESSING PINCERS
PINCE D'USINAGE HYDRAULIQUE

(43) Veröffentlichungstag der Anmeldung: 29.10.2008
(73) Patentinhaber: Schmidt, Heiko, 93138 Lappersdorf (DE)
(72) Erfinder: Schmidt, Heiko, 93138 Lappersdorf (DE)
(74) Vertreter: Graf, Helmut
(86) Internationale Anmeldenummer: PCT/DE2006/000271
(87) Internationale Veröffentlichungsnummer: WO 2007/093136

(56) Entgegenhaltungen:
- EP-A- 0 007 776
- DE-A1- 3 505 463
- DE-A1- 10 359 879

## Beschreibung

Die Erfindung bezieht sich auf eine hydraulische Bearbeitungszange gemäß Oberbegriff Patentanspruch 1.

Unter "Bearbeitungszange" ist im Sinne der Erfindung generell eine Vorrichtung zu verstehen, mit der hydraulisch und dadurch mit hoher Krafteinwirkung Werkstücke bearbeitet und/oder verarbeitet werden können und die für dieses Be- und/oder Verarbeiten wenigstens zwei relativ zueinander bewegbare und ein Arbeitsspalt zwischen sich bildende Elemente oder Werkzeugteile aufweist, von denen eines ein hydraulisch betätigter Werkzeugstößel ist oder an einem solchen vorgesehen ist und von denen ein weiteres eine Werkstückanlage oder ein weiteres Werkstückelement bildet.

Eine hydraulische Bearbeitungszange der gattungsmäßigen Art ist aus der DE 103 59 879 bekannt und wird beispielsweise dazu verwendet, um in Werkstücke aus Blech Funktionselemente, beispielsweise Muttern, Bolzen usw. durch Fügen und anschließendes Verpressen vorzusehen.

Speziell für das Verpressen ist ein Werkzeugstößel bzw. Plunger vorgesehen, der zum Schließen der Bearbeitungszange beim Zustellen aus einer Werkzeugstößel- oder Plungerausgangsposition in eine Arbeitsposition bewegbar ist, in der sich der Plunger an dem in das Werkstück einzusetzenden Funktionselement und sich dieses am Werkstück abstützen. Durch einen hydraulischen Druckzylinder erfolgt dann das Fixieren des Funktionselementes im Werkstück durch Verpressen, d. h. durch bleibende Materialverformung beispielsweise des Funktionselementes und/oder des Werkstückes.

Der grundsätzliche Vorteil der bekannten Setzzange besteht darin, dass die Zustellbewegung des Werkzeugstößels bzw. Plungers mit großem Hub, aber mit reduzierter Kraft erfolgen kann, während bei bereits geschlossener Bearbeitungszange dann die für das eigentliche Bearbeiten bzw. Verpressen erforderliche erhöhte Kraft durch den Druckzylinder, aber bei äußerst geringem Hub erzeugt wird. Um dies zu erreichen ist die Bearbeitungszange so ausgebildet, dass der Druckkolben des Druckzylinders achsgleich mit dem Werkzeugstößel bzw. Plunger angeordnet ist, allerdings derart, dass der zugestellte Plunger von dem Druckkolben des Druckzylinders axial beabstandet ist. Über ein Druckstück, welches radial zur Achse des Werkzeugstößels bewegbar ist, ist der Abstand zwischen dem Druckkolben des Druckzylinders und dem zugestellten Werkzeugstößel überbrückt, sodass der Druckkolben beim Verpressen über dieses Druckstück auf den Werkzeugstößel einwirkt. Bei in die Ausgangsstellung zurückbewegtem Werkzeugstößel bzw. bei geöffneter Bearbeitungszange befindet sich das Druckstück seitlich vom Werkzeugstößel und gibt damit den für das Rückbewegen des Werkzeugstößels in seine Ausgangsposition notwendigen Raum frei.

Nachteilig bei der bekannten Bearbeitungszange ist ihre relativ große Bauhöhe, die insbesondere dadurch bedingt ist, dass die Abmessung, die das Druckübertragungselement bzw. Druckstück in Achsrichtung des Werkzeugstößels aufweist, wenigstens gleich dem Hub dieses Werkzeugstößels aus seiner Ausgangsposition in die Arbeitsposition ist.

Aufgabe der Erfindung ist es, eine Bearbeitungszange aufzuzeigen, die unter Beibehaltung der grundsätzlichen Vorteile eine kleinere Bauform ermöglicht. Zur Lösung dieser Aufgabe ist die Bearbeitungszange entsprechend dem Patentanspruch 1 ausgebildet.

Der Vorteil der Erfindung besteht insbesondere darin, dass der Werkzeugstößel oder Plunger in seiner zurückgezogenen Position bzw. Ausgangsposition zumindest mit einer Teillänge in dem Druckzylinder bzw. in dem dortigen Kolben und/oder in der dortigen Kolbenstange aufgenommen ist, die Abmessungen des Druckübertragungselementes in Richtung der Achse des Werkzeugstößels also sehr viel kleiner als der Hub des Werkzeugstößels gewählt werden können.

Um diesen Nachteil zu beheben, wurde auch bereits vorgeschlagen, den Druckzylinder radial zur Achse des Werkzeugstößels verschiebbar vorzusehen, was allerdings insbesondere wegen der hohen Druckkräfte, die vom Druckzylinder auf den Werkzeugstößel übertragen werden müssen, einen erhöhten konstruktiven Aufwand bedeutet.

Die Erfindung zeichnet sich durch eine reduzierte Bauhöhe bei vereinfachter Konstruktion aus. Weiterbildungen der Erfindung sind Gegenstand der Unteransprüche.

Die Erfindung wird im Folgenden anhand der Figuren an Ausführungsbeispielen näher erläutert. Es zeigen:
- Fig. 1: Die Elemente einer Arbeitsstation zum Einbringen von Komponenten, beispielsweise Verbindungselementen in ein Werkstück;
- Fig. 2 u. 3: Eine Bearbeitungs- oder Setzzange der Arbeitsstation der Figur 1 in verschiedenen Betriebszuständen;
- Fig. 4: In schematischer Darstellung den Druckzylinder der Bearbeitungszange bei einer weiteren möglichen Ausführungsform.

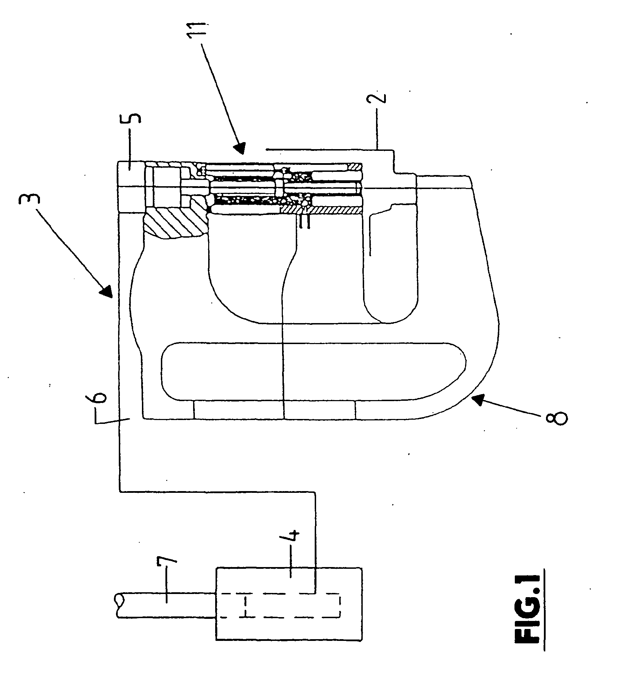

Die in der Figur 1 dargestellte Arbeitsstation dient zum Einbringen von Komponenten, beispielsweise zum Einbringen von Muttern 1 in aus Blech gefertigte Werkstücke 2.

Die Arbeitsstation besteht hierfür im Wesentlichen aus einem von einer C- oder Setzzange 3 gebildeten Arbeitsplatz und aus einem die Setzzange 3 antreibenden, von dieser Zange z.B. räumlich getrennt angeordneten hydraulischen Arbeitszylinder 4. Der Arbeitszylinder 4 bzw. dessen Arbeitskolben 4.1 durch einen geeigneten Antrieb, bei der dargestellten Ausführungsform beispielsweise von einem nicht dargestellten Motor über eine Gewindespindel 7 betätigt wird. Die Setzzange 3 bzw. ein dort vorgesehener Druckzylinder 5 und der Arbeitszylinder 4 sind über eine hydraulische Druckleitung 6 miteinander verbunden.

Die Setzzange 3, die an einem nicht dargestellten Maschinengestell oder einem nicht dargestellten Halter befestigt ist, besteht aus einem C-förmigen Zangenrahmen 8 mit den Schenkeln 8.1 und 8.2 sowie mit dem die Schenkel verbindenden Jochabschnitt 8.3, mit welchem die Zange 8 auch an einem nicht dargestellten Maschinengestell befestigt ist. An dem in den Figuren unteren Schenkel 8.1 ist ein Werkzeugträger 9 mit einem beispielsweise matrizenartigen Werkzeugteil 10 vorgesehen.

An dem anderem, dem Zangenarm 8.1 gegenüberliegenden und in den Figuren oberen Zangenarm oder Schenkel 8.2 ist ein stanzkopfartiges Verpresswerkzeug 11 befestigt. Dieses ist in den Figuren nur sehr schematisch dargestellt und besteht im Wesentlichen aus einem Stößel oder Plunger 12, der in einem an dem Zangenarm 8.2 befestigten Gehäuse 13 für einen axialen Bewegungshub in der Plungerachse AP verschiebbar geführt ist, mit einer Teillänge über die dem Zangenarm 8.1 zugewandte Seite des Gehäuses 13 vorsteht und am Ende dieser Teillänge ein Werkzeugteil 14 trägt, welches im Zusammenwirken mit dem Werkzeugteil 10 das Fügen und Fixieren (durch Verpressen) der jeweiligen Komponente 1 im Werkstück 2 bewirkt.

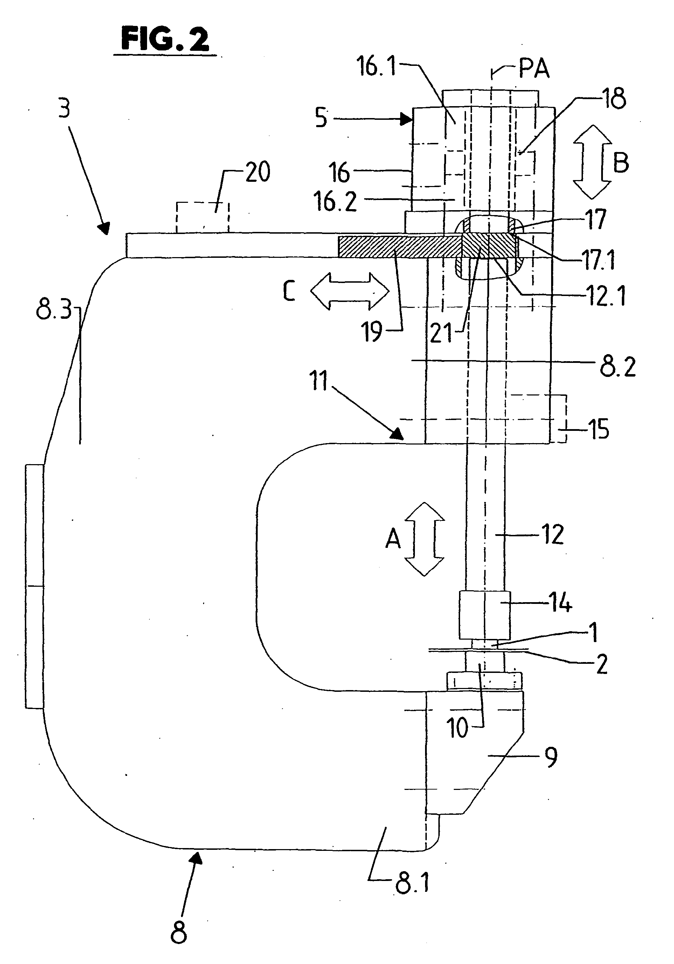

Eine Besonderheit der Setzzange 3 bzw. des Verpresswerkzeuges 11 besteht u.a. darin, dass das Schließen der Setzzange 3, d.h. das Heranbewegen des Plungers 12 mit dem Werkzeugteil 14 und der einzubringenden Komponente 1 aus der Plungerausgangsposition an das Werkstück 2 bzw. in die Plungerarbeitsposition sowie das Wieder-Öffnen der Setzzange 3, d.h. das Wegführen des Werkzeugteils 14 vom Werkstück 2 und das Zurückbewegen des Plungers 12 in seine Plungerausgangsposition durch axiales Bewegen des Plungers 12 mit großem Hub A erfolgt, und zwar durch einen in der Figur 2 schematisch angedeuteten Antrieb 15, der beispielsweise ein pneumatischer, elektrischer oder hydraulischer Antrieb ist und diese axiale Bewegung des Plungers 12 mit relativ geringer Kraft bewirkt. Das Verpressen der Komponente 1 erfolgt mit großer Kraft und bei geringem Hub B durch den Druckzylinder 5, der an der Oberseite des Gehäuses 13 vorgesehen ist.

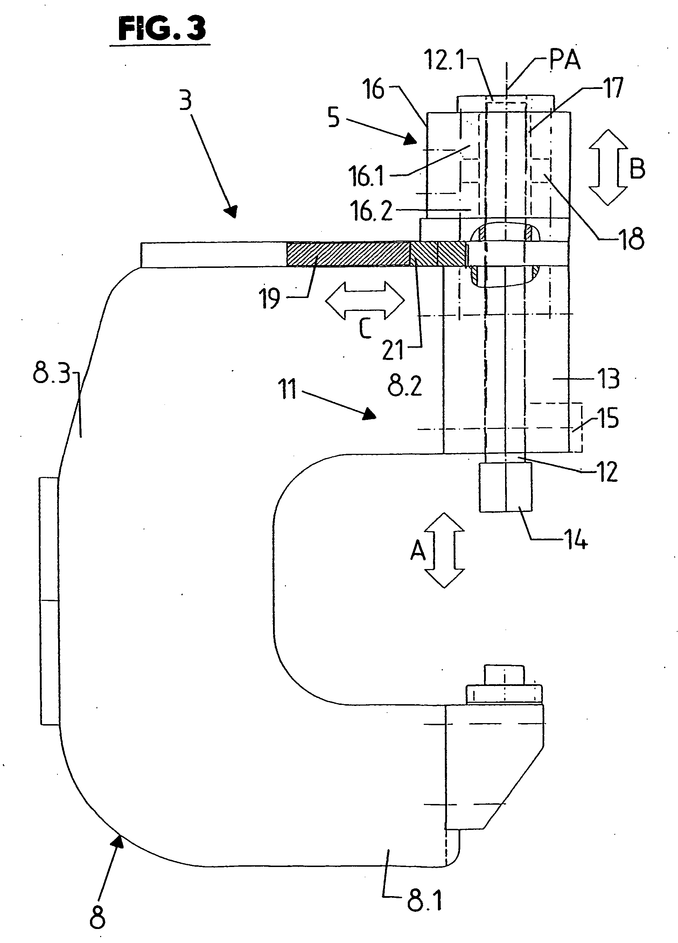

Der Druckzylinder 5 besteht, wie in den Figuren 2 und 3 schematisch dargestellt, aus einem Zylindergehäuse 16 und aus einer axial in diesem Zylindergehäuse verschiebbaren Kolbenstange 17 mit Kolben 18, der zwei Zylinderkammern 16.1 und 16.2 begrenzt, von denen die Zylinderkammer 16.1 beim Verpressen mit dem Hydraulik-Druck des Arbeitszylinders 4 beaufschlagbar ist.

Die Achse der Kolbenstange 17 ist achsgleich mit der Achse AP des Plungers 12 angeordnet, weiterhin ist die Kolbenstange 17 als Hohlstange ausgebildet und zwar mit einem Innendurchmesser, der etwas größer ist als der Außendurchmesser des Plungers 12, sodass der Plunger 12 in seiner angehobenen, d.h. zurückbewegten Plungerausgangsposition, in der das Werkzeugteil 14 den größeren Abstand von dem Werkzeugteil 10 aufweist und somit die Setzzange 3 geöffnet ist, mit einer Teillänge in der Kolbenstange 17 aufgenommen ist und sich hierdurch für die Setzzange 3 eine geringe Bauhöhe ergibt.

Um die für das Verpressen notwendige antriebsmäßige Verbindung zwischen der Kolbenstange 17 und dem Plunger 12 herzustellen, ist an der Oberseite des Zangenarmes oder Schenkels 8.2 radial zur Setzzangenachse AP ein Schieber 19 verschiebbar geführt (Doppelpfeil C), und zwar durch einen Antrieb 20, der z. B. wiederum ein elektromotorischer, hydraulischer oder pneumatischer Antrieb ist. Im Schieber 19 ist eine Druckplatte 21 so angeordnet bzw. geführt, dass diese im Schieber mit einem geringen Hub in eine Achsrichtung parallel zur Achse SA beweglich ist.

Durch den Antrieb 20 kann der Schieber 19 zwischen einer Ausgangsstellung, in der dieser Schieber 19 einschließlich der Druckplatte 21 vollständig außerhalb des Bewegungsraumes des Plungers 12 liegt (Figur 3) in eine Arbeitsstellung bewegt werden, in der der Schieber 19 bzw. dessen Druckplatte 21 achsgleich mit der Achse SA angeordnet sind.

Die Arbeitsweise der Setzzange 3 ergibt sich aus der Darstellung der Figuren 2 und 3. Es wird davon ausgegangen, dass die Setzzange 3 geöffnet ist. In diesem Fall ist der Plunger bei in die Ausgangsstellung zurückbewegtem Schieber 19 durch den Antrieb 15 soweit nach oben bewegt, dass das Werkzeugteil 14 den größeren Abstand von dem Werkzeugteil 10 besitzt und die oberen Teillänge des Plungers 12 in der als Hohlstange ausgebildeten Kolbenstange 17 aufgenommen ist. Nach dem Einlegen des Werkstückes 2 wird die Setzzange 3 geschlossen, d.h. mit dem Antrieb 15 wird der Plunger 12 soweit nach unten in die Plungerarbeitsposition bewegt, dass das Werkzeugteil 14 mit dem an diesem Werkzeugteil bereits vorhandenen Funktionselement 1 gegen das Werkstück 2 anliegt. Das obere Ende 12.1 des Plungers 12 befindet sich dann in der Ebene der Unterseite des Schiebers 19 bzw. der Druckplatte 21 oder etwas tiefer, auf jeden Fall aber mit Abstand unter dem unteren Ende 17.1 der Kolbenstange 17, welches sich hierbei auf dem Niveau oder etwas oberhalb des Niveaus der Oberseite des Schiebers 19 bzw. der Oberseite der Druckplatte 21 befindet.

Anschließend wird mit dem Antrieb 20 der Schieber 19 aus seiner Ausgangsstellung in die Arbeitsstellung bewegt (Pfeil C), in der die Druckplatte 21 dann zwischen dem Ende 17.1 der Kolbenstange 17 und der Oberseite 12.1 des Plungers 12 angeordnet, über diese Druckplatte 21 also eine antriebsmäßige Verbindung zwischen der Kolbenstange 17 und dem Plunger 12 hergestellt ist. Durch Beaufschlagen des Zylinderraumes 16.1 mit dem vom Arbeitszylinder 4 gelieferten Hydraulik-Druck erfolgt dann über die Kolbenstange 18, die Druckplatte 21, dem Plunger 12 und das Werkzeugteil 14 das Verpressen des Funktionselementes 1 (z.B. Mutter) im Werkstück 2 (z.B. Blechteil) bei kurzem Hub B.

Nach dem Verpressen wird der Schieber 19 in seine Ausgangsstellung zurückbewegt, sodass dann zum Öffnen der Setzzange 3 der Plunger 12 mit dem Antrieb 15 wieder nach oben bewegt werden kann und die obere Länge des Plungers 12 wieder in der Kolbenstange 17 aufgenommen ist. Das Zurückbewegen des Kolbens 18 erfolgt beispielsweise durch Beaufschlagen des Zylinderraumes 16.2 mit dem Hydraulik-Druck.

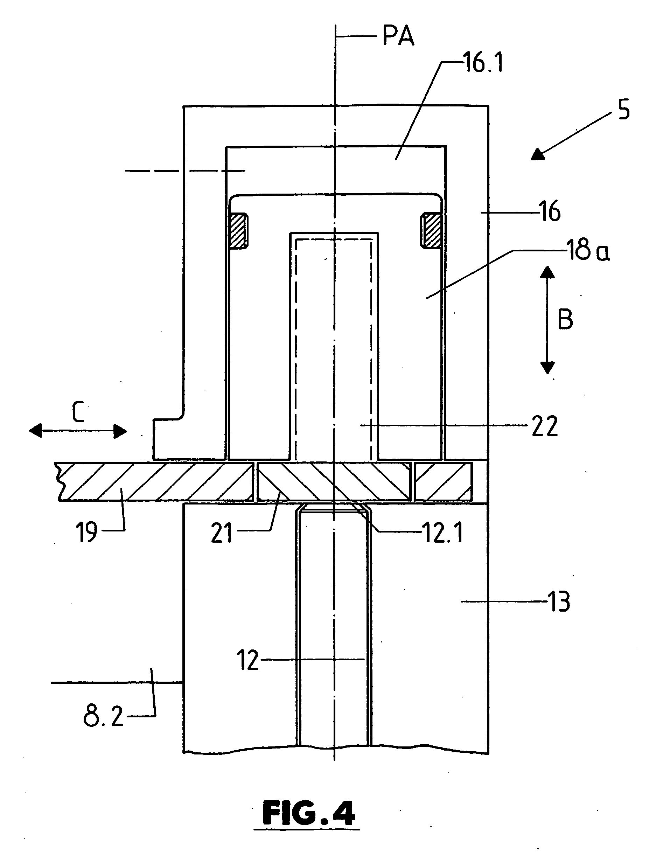

Vorstehend wurde davon ausgegangen, dass die Kolbenstange 17 hohlrohrartig ausgebildet ist. Grundsätzlich sind auch andere Ausführungen denkbar. So ist es beispielsweise entsprechend der Figur 4 auch möglich, anstelle des Kolbens 18 einen Kolben 18' zu verwenden, der in dem Zylinderraum des Zylindergehäuses 16 axial verschiebbar geführt ist und ein hierfür geeignetes Verhältnis Kolbenlänge zu Kolbendurchmesser aufweist. Der Kolben 18a ist mit einer Öffnung 22 versehen, die an der dem Plunger 12 zugewandten Unterseite offen ist und in der der Plunger 12 in der Plungerausgangsposition mit einer Teillänge aufgenommen wird. Für das Verpressen ist dann die Öffnung 22 wiederum durch die Druckplatte 21 verschlossen, d. h. letztere ist zwischen dem Kolben 18a und dem oberen Plungerende 12.1 angeordnet.

Weiterhin ist es möglich, insbesondere auch das Werkzeugteil 14 so auszubilden, dass es einen entsprechenden Niederhalter aufweist, welcher beispielsweise vor dem Verpressen das Werkstück 2 gegen das Werkzeugteil 10 andrückt und dort in der Lage fixiert.

Die Erfindung wurde voranstehend an Ausführungsbeispielen beschrieben. Es versteht sich, dass zahlreiche Änderungen sowie Abwandlungen möglich sind, ohne das dadurch der der Erfindung zugrunde liegende Erfindungsgedanke verlassen wird, wobei allen Ausführungen gemeinsam ist, dass der Kolben oder die Kolbenstange des Druckzylinders 5 so ausgeführt sind, dass in diesem Druckzylinder bei geöffneter Setzzange eine Teillänge des Plungers 12 aufgenommen ist.

### Bezugszeichenliste

- 1: Funktionselement, beispielsweise Mutter
- 2: Werkstück
- 3: Setzzange
- 4: Arbeitszylinder
- 5: Druckzylinder
- 6: hydraulische Druckleitung
- 7: Gewindespindel
- 8: C-förmiger Zangenrahmen
- 8.1,8.2: Zangenarm
- 8.3: Abschnitt
- 9: Werkzeugträger am Zangenarm 8.1
- 10: Werkzeugteil
- 11: Verpresswerkzeug
- 12: Plunger
- 12.1: oberes Ende des Plungers 12
- 13: Gehäuse
- 14: Werkzeugteil
- 15: Antrieb
- 16: Zylindergehäuse des Druckzylinders 5
- 16.1, 16.2: Zylinderraum
- 17: Kolbenstange
- 17.1: Ende der Kolbenstange 17
- 18, 18a: Kolben
- 19: Schieber
- 20: Antrieb für Schieber 19
- 21: Druckplatte
- 22: Öffnung

- A: Zustellbewegung des Plungers 12 bzw. Werkzeugteils 14
- B: Bewegungshub des Druckzylinders 5
- C: Bewegung des Schiebers 19

## Patentansprüche

1. Hydraulische Bearbeitungszange zum Be- und/oder Verarbeiten von Werkstücken (2), mit einem Werkzeug mit einem axial verschiebbaren Werkzeugstößel oder Plunger (12), welcher durch einen ersten Hilfsantrieb (15) zwischen einer Plungerausgangsposition in eine Plungerarbeitsposition bewegbar ist, in der der Plunger (12) oder ein an diesem vorgesehenes erstes Werkzeugteil (14) oder ein an diesem Werkzeugteil gehaltenes Funktionselement (1) gegen ein an einer Werkstückanlagefläche oder an einem zweiten Werkzeugteil (10) sich abstützendes Werkstück (2) anliegt, mit einer hydraulischen Betätigungseinrichtung (5), über die der in der Plungerarbeitsposition befindliche Werkzeugstößel oder Plunger (12) über ein Druckübertragungselement (21) mit einer erhöhten axialen Kraft beaufschlagbar ist, wobei das Druckübertragungselement (21) zwischen einer Druckübertragungselement-Arbeitsposition, in der es zwischen einem Kolben (18) oder einer Kolbenstange (17) der Betätigungseinrichtung (5) und dem Plunger (12) angeordnet ist, und einer Druckübertragungselement-Ausgangsposition bewegbar ist, in der das Druckübertragungselement (21) einen Raum für das Rückbewegen des Werkzeugstößels oder Plungers (12) in die Plungerausgangsposition freigibt,
**dadurch gekennzeichnet,**
**dass** der Kolben (18) und/oder die Kolbenstange (17) mit einem Hohlraum ausgebildet sind, in dem der Werkzeugstößel oder Plunger (12) in seiner Plungerausgangsposition zumindest mit einer Teillänge aufgenommen ist, und dass das Druckübertragungselement (21) in seiner Druckübertragungselement Arbeitsposition eine den Hohlraum des Kolbens (18) und/oder der Kolbenstange (17) verschließende Anlagefläche für den Werkzeugstößel oder Plunger (12) an dem Kolben (18) oder Kolbenstange (17) der Betätigungseinrichtung (5) bildet.

2. Bearbeitungszange nach Anspruch 1, **dadurch gekennzeichnet, dass** das Druckübertragungselement (21) zwischen seiner Druckübertragungselement-Ausgangsposition und Druckübertragungselement-Arbeitsposition radial oder annähernd radial zur Achse des Werkzeugstößels oder Plunger (12) bzw. zur Achse des Kolbens oder der Kolbenstange (17) der hydraulischen Betätigungseinrichtung (5) bewegbar ist.

3. Bearbeitungszange nach Anspruch 1 oder 2, **dadurch gekennzeichnet, dass** das Druckübertragungselement ein Druckstück oder eine Druckplatte (21) ist, welches in der Druckübertragungselement-Arbeitsposition zwischen einer Fläche des Werkzeugstößels oder Plunger (12), beispielsweise zwischen einem dem ersten Werkzeugteil (14) abgewandten Ende oder Stirnfläche (12.1) des Plungers, und einer dem Plunger (12) zugewandten Fläche (17.1) des Kolbens (18) oder der Kolbenstange (17) der Betätigungseinrichtung (5) angeordnet ist.

4. Bearbeitungszange nach einem der vorhergehenden Ansprüche, **dadurch gekennzeichnet, dass** die Kolbenstange (17) als Hohlstange ausgebildet ist, in der der Werkzeugstößel oder Plunger (12) in seiner Plungerausgangsposition zumindest mit einer Teillänge aufgenommen ist.

5. Bearbeitungszange nach einem der vorhergehenden Ansprüche, **dadurch gekennzeichnet, dass** das Druckübertragungselement (21) in einem Schieber (19) angeordnet und mit diesem Schieber zwischen der Druckübertragungselement-Ausgangsposition und der Druckübertragungselement-Arbeitsposition bewegbar ist.

6. Bearbeitungszange nach einem der vorhergehenden Ansprüche, **dadurch gekennzeichnet, dass** der Kolben (18) mit einem Hohlraum zur Aufnahme des Werkzeugstößels oder Plungers (12) in der Plungerausgangsposition ausgebildet ist.

## Claims

1. Hydraulic processing pincers for machining and/or handling workpieces (2) with a tool having an axially displaceable tool ram or plunger (12) which can be moved by a first auxiliary drive (15) between a plunger starting position and a plunger working position in which the plunger (12) or a first tool part (14) provided on the latter or a functional element (10 held on this tool part bears against a workpiece (2) which is supported on a workpiece bearing surface or on a second tool part (10), with a hydraulic actuating mechanism (5) through which the tool ram or plunger (12) which is located in the plunger working position can be loaded with an increased axial force by way of a pressure transmitting element (21), wherein the pressure transmitting element (21) can be moved between a pressure transmitting element working position in which it is mounted between a piston (18) or a piston rod (17) of the actuating mechanism (5) and the plunger (12), and a pressure transmitting element starting position in which the pressure transmitting element (21) releases a space for the return movement of the tool ram or plunger (12) into the plunger starting position,
**characterised in that**
the piston (18) and/or the piston rod (17) are formed with a hollow cavity in which the tool ram or plunger (12) is housed by at least part of its length in its plunger starting position, and that the pressure transmitting element (21) in its pressure transmitting element working position forms a contact bearing face for the tool ram or plunger (12) on the piston (18) or piston rod (17) of the actuating mechanism (5) wherein this contact bearing face closes the hollow cavity of the piston (18) and/or the piston rod (17).

2. Processing pincers according to claim 1 **characterised in that** the pressure transmitting element (21) is movable between its pressure transmitting element starting position and pressure transmitting element working position radially or approximately radially relative to the axis of the tool ram or plunger (12) or to the axis of the piston or piston rod (17) of the hydraulic actuating mechanism (5).

3. Processing pincers according to claim 1 or 2 **characterised in that** the pressure transmitting element is a pressure member or a pressure plate (21) which is mounted in the pressure transmitting element working position between a surface of the tool ram or plunger (12), by way of example between an end or end face (12.1) of the plunger remote from the first tool part (14), and a surface (17.1) of the piston (18) facing the plunger (12) or of the piston rod (17) of the actuating mechanism (5).

4. Processing pincers according to one of the preceding claims **characterised in that** the piston rod (17) is designed as a hollow rod in which the tool ram or plunger (12) is housed by at least part of its length in its plunger starting position.

5. Processing pincers according to one of the preceding claims **characterised in that** the pressure transmitting element (21) is mounted in a slider (19) and is movable with this slider between the pressure transmitting element starting position and the pressure transmitting element working position.

6. Processing pincers according to one of the preceding claims **characterised in that** the piston (18) is designed with a hollow cavity to receive the tool ram or plunger (12) in the plunger starting position.

## Revendications

1. Pince d'usinage hydraulique destinée à usiner et/ou traiter des pièces (2), comprenant un outil doté d'un coulisseau ou plongeur (12) axialement mobile, lequel peut être déplacé par un premier entraînement auxiliaire (15) d'une position de départ de plongeur dans une position de travail de plongeur, dans laquelle le plongeur (12) ou une première partie d'outil (14) prévue sur celui-ci ou un élément opérationnel (1) maintenu sur cette partie d'outil s'applique contre une pièce (2) s'appuyant sur une surface d'appui de pièce ou sur une seconde partie de pièce (10), comprenant un dispositif d'actionnement hydraulique (5) par l'intermédiaire duquel le coulisseau ou le plongeur (12) situé dans la position de travail du plongeur peut être soumis à l'influence d'une force axiale accrue par un élément de transfert de pression (21), l'élément de transfert de pression (21) pouvant se déplacer entre une position de travail de l'élément de transfert de pression dans laquelle il est disposé entre un piston (18) ou une tige de piston (17) du dispositif d'actionnement (5) et le plongeur (12), et une position de départ de l'élément de transfert de pression, dans laquelle l'élément de transfert de pression (21) libère un espace pour le déplacement en arrière du coulisseau ou du plongeur (12) dans la position de départ de plongeur,
**caractérisée en ce que**
le piston (18) et/ou la tige de piston (17) sont dotés d'une cavité dans laquelle le coulisseau ou plongeur (12) est logé dans sa position de départ de plongeur au moins avec une longueur partielle, et **en ce que** l'élément de transfert de pression (21) forme dans sa position de travail d'élément de transfert de pression une surface d'appui fermant la cavité du piston (18) et/ou de la tige de piston (17) pour le coulisseau ou le plongeur (12) sur le piston (18) ou la tige de piston (17) du dispositif d'actionnement (5).

2. Pince d'usinage selon la revendication 1, **caractérisée en ce que** l'élément de transfert de pression (21) peut être déplacé entre sa position de départ d'élément de transfert de pression et sa position de travail d'élément de transfert de pression de manière radiale ou à peu près radiale par rapport à l'axe du coulisseau ou piston (12) et/ou par rapport à l'axe du piston ou de la tige de piston (17) du dispositif d'actionnement hydraulique (5).

3. Pince d'usinage selon la revendication 1 ou 2, **caractérisée en ce que** l'élément de transfert de pression est une pièce de pression ou une plaque de pression (21) disposée dans la position de travail d'élément de transfert de pression entre une surface du coulisseau ou piston (12), par exemple entre une extrémité ou face frontale (12.1) du plongeur tournée vers la première partie d'outil (14), et une surface (17.1) du piston (18) ou de la tige de piston (17) du dispositif d'actionnement (5) tournée vers le plongeur (12).

4. Pince d'usinage selon l'une quelconque des revendications précédentes, **caractérisée en ce que** la tige de piston (17) est conçue comme une tige creuse dans laquelle le coulisseau ou le plongeur (12) dans sa position de départ de plongeur est logé au moins avec une longueur partielle.

5. Pince d'usinage selon l'une quelconque des revendications précédentes, **caractérisée en ce que** l'élément de transfert de pression (21) est disposé dans un tiroir (19) et peut être déplacé avec ce tiroir entre la position de départ d'élément de transfert de pression et la position de travail d'élément de transfert de pression.

6. Pince d'usinage selon l'une quelconque des revendications précédentes, **caractérisée en ce que** le piston (18) est équipé d'une cavité destinée à loger le coulisseau ou plongeur (12) dans la position de départ de plongeur.
